(19) **Europäisches Patentamt European Patent Office Office européen des brevets**

(11) **EP 4 459 731 A1**

(12) **EUROPEAN PATENT APPLICATION**
published in accordance with Art. 153(4) EPC

(43) Date of publication:
06.11.2024 Bulletin 2024/45

(21) Application number: 21969772.9

(22) Date of filing: 31.12.2021

(51) International Patent Classification (IPC):
$H01M\ 10/0567^{(2010.01)}$

(52) Cooperative Patent Classification (CPC):
H01M 10/0567; Y02E 60/10

(86) International application number:
PCT/CN2021/143871

(87) International publication number:
WO 2023/123427 (06.07.2023 Gazette 2023/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Dongguan Amperex Technology
Limited
Dongguan City, Guangdong Province, PRC
523000 (CN)

(72) Inventors:
• XU, Chunrui
  Dongguan City, Guangdong 523000 (CN)
• XU, Yanyan
  Dongguan City, Guangdong 523000 (CN)
• TANG, Chao
  Dongguan City, Guangdong 523000 (CN)

(74) Representative: Icosa
83 avenue Denfert-Rochereau
75014 Paris (FR)

(54) **ELECTROCHEMICAL DEVICE AND ELECTRONIC DEVICE COMPRISING SAME**

(57) This application relates to an electrochemical device and an electronic device including the same. The electrochemical device of this application includes: a negative electrode; a positive electrode, where the positive electrode includes a current collector and a positive electrode active material layer provided on the current collector, the positive electrode active material layer includes a positive electrode active material, and the positive electrode has an active specific surface area of X $m^2$/g; and an electrolyte, where the electrolyte contains an additive A, the additive A contains $LiPO_2F_2$, and a weight percentage of the $LiPO_2F_2$ is Y% based on a weight of the electrolyte, where $0.005 \leq X/Y \leq 2$ is satisfied. The electrochemical device of this application has higher cycling performance, storage performance, and overcharge performance, as well as lower impedance.

**Description**

**TECHNICAL FIELD**

This application relates to the field of energy storage, specifically to an electrochemical device and an electronic device including the same, and in particular to a lithium-ion battery.

**BACKGROUND**

Currently, lithium-ion batteries have been widely used in fields such as electric vehicles, consumer electronic products, and energy storage devices, and have gradually become mainstream batteries in these fields by virtue of their advantages such as high energy density and zero memory effect. In particular, electric vehicles, micro-power, and energy storage industries have driven into the fast lane of development, providing a broad blue ocean for application of lithium-ion batteries. Due to characteristics of a lithium iron phosphate positive electrode material, batteries made of such material have the features of high safety performance, long service life, excellent high-temperature performance, low cost, and environmental friendliness, and have more advantages and wider future application compared with other types of lithium-ion batteries. Although the lithium iron phosphate batteries have a relatively long service life, as traction battery and energy storage fields impose higher requirements for the service life of batteries, it is still important to further improve the storage performance, cycling performance, safety performance, and kinetic performance of lithium-ion batteries at a low cost.

It is cost-effective to improve the life and safety performance of lithium iron phosphate batteries by optimizing the electrolyte.

**SUMMARY**

An embodiment of this application provides an electrochemical device, so as to solve at least one problem existing in the related field to at least some extent. An embodiment of this application further provides an electronic device including such electrochemical device.

In an embodiment, this application provides an electrochemical device. The electrochemical device includes: a negative electrode; a positive electrode, where the positive electrode includes a current collector and a positive electrode active material layer provided on the current collector, the positive electrode active material layer includes a positive electrode active material, and the positive electrode has an active specific surface area of X $m^2/g$; and an electrolyte, where the electrolyte contains an additive A, the additive A contains $LiPO_2F_2$, and a weight percentage of the $LiPO_2F_2$ is Y% based on a weight of the electrolyte; where $0.005 \leq X/Y \leq 2$ is satisfied.

In an embodiment, X and Y satisfy at least one of the following conditions (i) to (iii): (i) $0.01 \leq X \leq 0.1$; (ii) $0.01 \leq Y \leq 2$; or (iii) $0.005 \leq X/Y \leq 1$.

In an embodiment, the electrolyte further contains vinylene carbonate, and a weight percentage of the vinylene carbonate is Z% based on the weight of the electrolyte, where Z is 0.01 to 6.

In some embodiments, Z/Y is 0.5 to 600.

In some embodiments, the electrolyte further contains fluoroethylene carbonate, and a weight percentage of the fluoroethylene carbonate is 0.01% to 5% based on the weight of the electrolyte.

In some embodiments, the electrolyte further contains an additive B and the additive B is at least one selected from the following compounds: lithium difluoro(oxalato)borate, lithium bis(oxalato)borate, lithium bis(fluorosulfonyl)imide, lithium bis(trifluoromethanesulfonyl)imide, lithium tetrafluoroborate, $B_4Li_2O_7$, $Li_3BO_3$, $CF_3LiO_3S$, lithium hexafluorophosphate, and lithium perchlorate; and/or a weight percentage of the additive B is 0.01% to 16% based on the weight of the electrolyte.

In some embodiments, the positive electrode active material includes element M and the element M is at least one selected from Fe, Mn, Al, Ca, K, Na, Mg, Ti, and Zn.

In some embodiments, a weight of the vinylene carbonate is W1 g, a weight of the negative electrode is W2 g, and W1/W2 is 0.001 to 0.031.

In some embodiments, the electrolyte further contains a compound containing an S=O functional group and the compound containing an S=O functional group is at least one selected from the following compounds: 1,3-propane sultone, ethylene sulfate, methylene methyl disulfonate, propene sultone, 4-methylvinyl sulfate, 1,4-butane sultone, and 1,2,6-oxy-dithiane-2,2,6,6-tetroxide; and/or a weight percentage of the compound containing an S=O functional group is 0.01% to 5% based on the weight of the electrolyte.

In another embodiment, this application provides an electronic device including the electrochemical device according to an embodiment of this application.

The electrochemical device provided in this application has improved cycling performance and high-temperature storage performance, as well as high charging performance and energy efficiency.

EP 4 459 731 A1

Additional aspects and advantages of some embodiments of this application are partly described and presented subsequently, or explained through implementation of some embodiments of this application.

## DESCRIPTION OF EMBODIMENTS

Some embodiments of this application are described in detail below. Some embodiments of this application should not be construed as limitations on the application.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In specific embodiments and claims, a list of items connected by the terms "one of", "one piece of", and "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may contain a single element or a plurality of elements. The item B may contain a single element or a plurality of elements. The item C may include a single element or a plurality of elements.

In the specific embodiments and claims, a list of items connected by the terms "at least one of", "at least one piece of", and "at least one kind of" or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may include a single element or a plurality of elements.

### I. Electrochemical device

In some embodiments, this application provides an electrochemical device, and the electrochemical device includes a negative electrode, a positive electrode, and an electrolyte.

In some embodiments, the positive electrode includes a current collector and a positive electrode active material layer provided on the current collector, the positive electrode active material layer includes a positive electrode active material, and the positive electrode has an active specific surface area of X $m^2$/g. The electrolyte contains an additive A, the additive A contains $LiPO_2F_2$, and a weight percentage of the $LiPO_2F_2$ is Y% based on a weight of the electrolyte, where $0.005 \leq X/Y \leq 2$ is satisfied.

In some embodiments, $0.005 \leq X/Y \leq 1$ or $0.015 \leq X/Y \leq 1$. In some embodiments, X/Y is 0.005, 0.0075, 0.01, 0.02, 0.05, 0.08, 0.10, 0.15, 0.3, 0.5, 0.8, 1, 1.5, 2, or in a range defined by any two of these values.

In some embodiments, X is 0.01 to 0.1. In some embodiments, X is 0.01, 0.015, 0.02, 0.05, 0.08, 0.1, or in a range defined by any two of these values.

In some embodiments, Y is 0.01 to 2. In some embodiments, Y is 0.01, 0.03, 0.05, 0.06, 0.1, 0.14, 0.16, 0.2, 0.4, 0.6, 0.8, 1.0, 1.1, 1.2, 1.4, 1.6, 1.8, 2, or in a range defined by any two of these values.

In some embodiments, the electrolyte further contains vinylene carbonate, and a weight percentage of the vinylene carbonate is Z% based on the weight of the electrolyte, where Z is 0.01 to 6.

In some embodiments, Z is 0.01, 0.05, 0.08, 0.1, 0.2, 0.5, 0.8, 0.01, 1, 1.5, 2, 2.5, 2.8, 3, 3.5, 3.8, 4, 4.5, 4.8, 5, 5.5, 5.8, 6, or in a range defined by any two of these values.

In some embodiments, Z/Y is 0.5 to 600. In some embodiments, Z/Y is 0.5 to 50. In some embodiments, Z/Y is 0.5, 1, 1.5, 2, 3, 4, 5, 6, 10, 20, 40, 50, 100, 150, 200, 300, 350, 400, 450, 500, 550, 600, or in a range defined by any two of these values.

In some embodiments, the electrolyte further contains fluoroethylene carbonate. In some embodiments, a weight percentage of the fluoroethylene carbonate is 0.01% to 5% based on the weight of the electrolyte. In some embodiments, based on the weight of the electrolyte, the weight percentage of the fluoroethylene carbonate is 0.01%, 0.05%, 0.07%, 0.1%, 0.15%, 0.3%, 0.8%, 1%, 1.2%, 1.5%, 1.8%, 2%, 2.2%, 2.5%, 2.8%, 3%, 3.2%, 3.5%, 3.8%, 4%, 4.5%, 4.8%, 5%, or in a range defined by any two of these values.

In some embodiments, the electrolyte further contains an additive B and the additive B is at least one selected from the following compounds: lithium difluoro(oxalato)borate, lithium bis(oxalato)borate, lithium bis(fluorosulfonyl)imide, lithium bis(trifluoromethanesulfonyl)imide, lithium tetrafluoroborate, $B_4Li_2O_7$, $Li_3BO_3$, $CF_3LiO_3S$, lithium hexafluorophosphate, and lithium perchlorate.

In some embodiments, a weight percentage of the additive B is 0.01% to 16% based on the weight of the electrolyte. In some embodiments, based on the weight of the electrolyte, the weight percentage of the additive B is 0.01%, 0.04%, 0.06%, 0.08%, 0.1%, 0.15%, 0.2%, 0.5%, 0.8%, 1%, 2%, 3%, 4%, 5%, 6%, 7%, 8%, 9%, 10%, 11%, 12%, 13%, 14%, 15%, 16%, or in a range defined by any two of these values.

In some embodiments, a weight of the vinylene carbonate is W1 g, a weight of the negative electrode is W2 g, and W1/W2 is 0.001 to 0.031.

In some embodiments, W1/W2 is 0.001, 0.006, 0.008, 0.01, 0.02, 0.025, 0.031, or in a range defined by any two of these values.

In some embodiments, the electrolyte further contains a compound containing an S=O functional group and the compound containing an S=O functional group is at least one selected from the following compounds: 1,3-propane sultone, ethylene sulfate, methylene methyl disulfonate, propene sultone, 4-methylvinyl sulfate, 1,4-butane sultone, 1,2,6-oxy-dithiane-2,2,6,6-tetroxide.

In some embodiments, the weight percentage of the compound containing an S=O functional group is 0.01% to 5% based on the weight of the electrolyte. In some embodiments, based on the weight of the electrolyte, the weight percentage of the compound containing an S=O functional group is 0.01%, 0.03%, 0.05%, 0.08%, 0.1%, 0.12%, 0.15%, 0.1%, 0.15%, 0.2%, 0.5%, 0.8%, 1%, 1.5%, 1.8%, 2.0%, 2.5%, 2.8%, 3%, 5%, or in a range defined by any two of these values.

In some embodiments, the positive electrode active material includes element M and the element M is at least one selected from Fe, Mn, Al, Ca, K, Na, Mg, Ti, and Zn.

In some embodiments, the positive electrode active material is at least one selected from lithium iron phosphate and lithium manganese iron phosphate.

In some embodiments, the positive electrode active material layer further includes a conductive agent. In some embodiments, the conductive agent includes at least one of carbon nanotubes, carbon fiber, acetylene black, graphene, Ketjen black, or carbon black.

In some embodiments, the positive electrode active material layer further includes a binder. In some embodiments, the binder includes at least one of polyvinylidene fluoride, carboxymethyl cellulose, styrene-butadiene rubber, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, poly(1,1-difluoroethylene), polyethylene, polypropylene, acrylic (ester) styrene-butadiene rubber, epoxy resin, or nylon.

In some embodiments, the current collector includes at least one of copper foil or aluminum foil.

In some embodiments, the positive electrode may be prepared by using a preparation method well known in the art. For example, the positive electrode may be obtained by using the following method. The positive electrode active material, the conductive agent, and the binder are mixed in a solvent to prepare an active material composition, and the active material composition is applied on the current collector. In some embodiments, the solvent may include N-methylpyrrolidone or the like, but is not limited thereto.

In some embodiments, the electrochemical device includes any device in which electrochemical reactions take place.

In some embodiments, the electrochemical device further includes a separator provided between the positive electrode and the negative electrode.

In some embodiments, the electrochemical device is a lithium secondary battery.

In some embodiments, the lithium secondary battery includes but is not limited to a lithium metal secondary battery, a lithium-ion secondary battery, a lithium polymer secondary battery, a lithium-ion polymer secondary battery, or an all-solid-state lithium secondary battery.

## Negative electrode

In some embodiments, the material, composition, and manufacturing method of the negative electrode used in the electrochemical device of this application may include any technology disclosed in the prior art. In some embodiments, the negative electrode is the negative electrode recorded in US patent application US9812739B, which is incorporated into this application by reference in its entirety.

In some embodiments, the negative electrode includes a current collector and a negative electrode active material layer provided on the current collector. In some embodiments, the negative electrode active material layer includes a negative electrode active material. In some embodiments, the negative electrode active material includes but is not limited to lithium metal, structured lithium metal, natural graphite, artificial graphite, mesocarbon microbeads (MCMB), hard carbon, soft carbon, silicon, a silicon-carbon composite, a silicon-oxide material (for example, SiO or $SiO_2$), a Li-Sn alloy, a Li-Sn-O alloy, Sn, SnO, $SnO_2$, spinel-structured lithiated $TiO_2$-$Li_4Ti_5O_{12}$, a Li-Al alloy, or any combination thereof.

In some embodiments, the negative electrode active material layer includes a binder. In some embodiments, the binder includes but is not limited to polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the negative electrode active material layer includes a conductive material. In some embodiments, the conductive material includes but is not limited to natural graphite, artificial graphite, carbon black, acetylene black, Ketjen black, carbon fiber, metal powder, metal fiber, copper, nickel, aluminum, silver, or a polyphenylene derivative.

In some embodiments, the current collector includes but is not limited to copper foil, nickel foil, stainless steel foil, titanium foil, nickel foam, copper foam, or a polymer substrate coated with conductive metal.

In some embodiments, the negative electrode may be obtained by using the following method. The active material, the conductive material, and the binder are mixed in a solvent to prepare an active material composition, and the active material composition is applied on the current collector.

In some embodiments, the solvent may include but is not limited to deionized water and N-methylpyrrolidone.

In some embodiments, the negative electrode in the all-solid-state lithium secondary battery is metal lithium foil.

## Separator

In some embodiments, the separator used in the electrochemical device according to this application is not particularly limited to any material or shape, and may be based on any technology disclosed in the prior art. In some embodiments, the separator includes a polymer or an inorganic material formed by a material stable to the electrolyte of this application.

For example, the separator may include a substrate layer and a surface treatment layer. The substrate layer is a non-woven fabric, membrane, or composite membrane having a porous structure, and a material of the substrate layer is at least one selected from polyethylene, polypropylene, polyethylene terephthalate, or polyimide. Specifically, polypropylene porous separator, polyethylene porous separator, polypropylene non-woven fabric, polyethylene non-woven fabric, or polypropylene-polyethylene-polypropylene porous composite separator may be selected.

The surface treatment layer is disposed on at least one surface of the substrate layer, and the surface treatment layer may be a polymer layer, an inorganic material layer, or a layer formed by mixing a polymer and an inorganic material.

The inorganic layer includes inorganic particles and a binder. The inorganic particles are selected from a combination of one or more of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from a combination of one or more of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

## Electrolytic salt

In some embodiments, the electrolytic salt used in the electrolyte according to an embodiment of this application may be an electrolytic salt known in the prior art. The electrolytic salt includes but is not limited to an inorganic lithium salt, such as $LiClO_4$, $LiPF_6$, $LiBF_4$, $LiSbF_6$, $LiSO_3F$, and $LiN(FSO_2)_2$, a fluorine-containing organic lithium salt, such as $LiCF_3SO_3$, $LiN(FSO_2)(CF_3SO_2)$, $LiN(CF_3SO_2)_2$, $LiN(C_2F_5SO_2)_2$, cyclic 1,3-hexafluoropropane disulfonimide lithium, cyclic 1,2-tetrafluoroethane disulfonimide lithium, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, and $LiBF_2(C_2F_5SO_2)_2$, and a lithium salt containing dicarboxylic acid complex, such as lithium bis(oxalato)borate, lithium difluoro(oxalato)borate, lithium tris(oxalato)phosphate, lithium difluorobis(oxalato)phosphate, and lithium tetrafluoro(oxalato)phosphate. In addition, one of the foregoing electrolytic salts may be used alone, or two or more thereof may be used. For example, in some embodiments, the electrolytic salt includes a combination of $LiPF_6$ and $LiBF_4$. In some embodiments, the electrolytic salt includes a combination of inorganic lithium salt such as $LiPF_6$ or $LiBF_4$ and fluorine-containing organic lithium salt such as $LiCF_3SO_3$, $LiN(CF_3SO_2)_2$, or $LiN(C_2F_5SO_2)_2$. In some embodiments, a concentration of the electrolytic salt falls within a range of 0.8 mol/L to 3 mol/L, for example, a range of 0.8 mol/L to 2.5 mol/L, 0.8 mol/L to 2 mol/L, 1 mol/L to 2 mol/L, 0.5 mol/L to 1.5 mol/L, 0.8 mol/L to 1.3 mol/L, or 0.5 mol/L to 1.2 mol/L. For another example, the concentration of the electrolytic salt is 1 mol/L, 1.15 mol/L, 1.2 mol/L, 1.5 mol/L, 2 mol/L, or 2.5 mol/L.

## II. Electronic device

The electronic device of this application may be any device using the electrochemical device according to some embodiments of this application.

In some embodiments, the electronic device includes but is not limited to a notebook computer, a pen-input computer, a mobile computer, an e-book player, a portable phone, a portable fax machine, a portable copier, a portable printer, a stereo headset, a video recorder, a liquid crystal display television, a portable cleaner, a portable CD player, a mini disc, a transceiver, an electronic notebook, a calculator, a storage card, a portable recorder, a radio, a backup power supply, a motor, an automobile, a motorcycle, a motor bicycle, a bicycle, a lighting appliance, a toy, a game console, a clock, an electric tool, a flash lamp, a camera, a large household battery, or a lithium-ion capacitor.

The following uses a lithium-ion battery as an example and describes preparation of a lithium-ion battery with reference to specific examples. Persons skilled in the art understand that the preparation method described in this application is only an example, and that all other suitable preparation methods fall within the scope of this application.

**Examples**

The following describes performance evaluation performed based on examples and comparative examples of the lithium-ion battery in this application.

I Preparation of lithium-ion battery

(1) Preparation of electrolyte

In an argon atmosphere glove box with a water content of less than 10 ppm, ethylene carbonate (EC), ethyl methyl carbonate (EMC), and diethyl carbonate (DEC) were mixed at a mass ratio of EC:EMC:DEC=35:40:25, an additive was added, the mixture was fully stirred, $LiPF_6$ was added, and then the resulting mixture was mixed to uniformity to obtain an electrolyte. Based on a weight of the electrolyte, a weight percentage of the $LiPF_6$ was 12.5%. The specific types and percentages of the additives used in the electrolyte are shown in the tables below. The percentages of the materials in the electrolyte described in this application were calculated based on the weight of the electrolyte.

(2) Preparation of positive electrode

A positive electrode active material lithium iron phosphate material (LFP), a conductive agent conductive carbon black (Super P), and a binder polyvinylidene fluoride were mixed at a weight ratio of 96.3:1.5:2.2, N-methylpyrrolidone (NMP) was added, and then the mixture was stirred to uniformity under the action of a vacuum mixer to obtain a positive electrode slurry, where a solid content of the positive electrode slurry was 72wt%. The positive electrode slurry was uniformly applied on a positive electrode current collector aluminum foil. The aluminum foil was dried at 85°C, followed by cold pressing, cutting, and slitting, and then was dried under vacuum at 85°C for 4 hours to obtain a positive electrode.

(3) Preparation of negative electrode

A negative electrode active material artificial graphite, a conductive agent Super P, a thickener sodium carboxymethyl cellulose (CMC), and a binder styrene-butadiene rubber (SBR) were mixed at a weight ratio of 96.4:1.5:0.5:1.6, and deionized water was added. The mixture was stirred under the action of a vacuum mixer to obtain a negative electrode slurry, where a solid content of the negative electrode slurry was 54wt%. The negative electrode slurry was uniformly applied on a negative electrode current collector copper foil. The copper foil was dried at 85°C, followed by cold pressing, cutting, and slitting, and then was dried under vacuum at 120°C for 12 hours to obtain a negative electrode.

(4) Preparation of separator

A 7 μm-thick polyethylene (PE) separator was used.

(5) Preparation of lithium-ion battery

The positive electrode, the separator, and the negative electrode were stacked in sequence, so that the separator was disposed between the positive and negative electrodes for separation, and then the resulting stack was wounded to obtain a bare cell. After welded with tabs, the bare cell was put in an outer package aluminum plastic film and the prepared electrolyte was injected into the dried bare cell, followed by processes such as vacuum packaging, standing, formation (charged to 3.3 V at a constant current of 0.02C and then charged to 3.6 V at a constant current of 0.1C), shaping, and capacity testing to obtain a pouch lithium-ion battery (3.3 mm thick, 39 mm wide, and 96 mm long).

II Test method

1. Cycling performance test of lithium-ion battery:

Cycling performance test at 25°C

The lithium-ion battery was placed in a 25°C thermostat and left standing for 30 minutes, so that the lithium-ion battery reached a constant temperature. The lithium-ion battery at a constant temperature was charged to a voltage of 3.65 V at a constant current of 1C, charged to a current of 0.05C at a constant voltage of 3.65 V, and then discharged to a voltage of 2.5 V at a constant current of 1C. This was one charge/discharge cycle. The first discharge capacity was 100%. Charge/discharge cycling was repeated until the discharge capacity degraded to 70%, and the number of cycles was recorded and used as an indicator for evaluating the cycling performance of the lithium-ion battery.

Cycling performance test at 45°C

The cycling performance test method for a battery at 45°C was basically the same as that for a battery at 25°C, except that the test temperature was 45°C.

2. High-temperature storage test of lithium-ion battery in high state-of-charge (100% SOC):

The lithium-ion battery was placed in a 25°C thermostat and left standing for 30 minutes, so that the lithium-ion battery reached a constant temperature. The lithium-ion battery was charged to 3.65 V at a constant current of 1C, charged to a current of 0.05C at a constant voltage of 3.65 V, and then discharged to 2.5 V at a constant current of 1C. The discharge capacity was recorded as the initial capacity of the lithium-ion battery. Then, the battery was charged to 3.65 V at a constant current of 0.5C, and then charged to a current of 0.05C at a constant voltage of 3.65 V. The thickness of the battery was measured with a micrometer and recorded. The lithium-ion battery under test was stored in a 60°C thermostat for 90 days, during which the thickness of the battery was measured and recorded every 30 days.
The battery was transferred to a 25°C thermostat, left standing for 60 minutes, and discharged to 2.5 V at a constant current of 1C. The discharge capacity was recorded as the remaining capacity of the lithium-ion battery. The battery was charged to 3.65 V at a constant current of 1C, charged to a current of 0.05C at a constant voltage of 3.65 V, and then discharged to 2.5 V at a constant current of 1C. The discharge capacity was recorded as the recoverable capacity of the lithium-ion battery. The thickness (THK), open circuit voltage (OCV), and impedance (IMP) of the battery were measured. The battery was discharged to a voltage of 2.5 V at a constant current of 1C. The recovered discharge capacity was recorded, and the residual capacity retention rate and recoverable capacity retention rate of the lithium-ion battery after storage were calculated and used as indicators for evaluating the high-temperature storage performance of the lithium-ion battery, where residual capacity retention rate = (residual capacity after 90 days of storage - initial capacity of battery)/initial capacity of battery * 100%;

and

recovered capacity retention rate = (recoverable capacity after 90 days of storage - initial capacity of battery)/initial capacity of battery * 100%.

3. High-temperature storage test of lithium-ion battery in low state-of-charge (0% SOC):

The lithium-ion battery was placed in a 25°C thermostat and left standing for 30 minutes, so that the lithium-ion battery reached a constant temperature. The lithium-ion battery was charged to 3.65 V at a constant current of 1C, charged to a current of 0.05C at a constant voltage of 3.65 V, and then discharged to 2.5 V at a constant current of 1C. The discharge capacity was recorded as the initial capacity of the lithium-ion battery. Then, the thickness of the battery was measured with a micrometer and recorded. The lithium-ion battery under test was stored in a 60°C thermostat for 90 days, during which the thickness of the battery was measured and recorded every 30 days. Then, the battery was transferred to a 25°C thermostat, left standing for 60 minutes, charged to 3.65 V at a constant current of 1C, charged to a current of 0.05C at a constant voltage, and then discharged to 2.5 V at a constant current of 1C. The discharge capacity was recorded as the recoverable capacity of the lithium-ion battery. The thickness (THK), open circuit voltage (OCV), and impedance (IMP) of the battery were measured. The battery was discharged to a voltage of 2.5 V at a constant current of 1C. The thickness swelling rate of the lithium-ion battery during storage was calculated and recorded, and was used as an indicator for evaluating the high-temperature storage performance of the lithium-ion battery at 0% SOC; where thickness swelling rate for storage at 0% SOC = (thickness after 90 days of storage - initial thickness of battery)/initial thickness of battery * 100%.

4. Direct current resistance DCR (-10°C) test of lithium-ion battery

The lithium-ion battery was placed in a -10°C high and low temperature box and left standing for 4 hours, so that the lithium-ion battery reached a constant temperature. The battery was charged to 3.65 V at a constant current of 0.1C, charged to a current of 0.05C at a constant voltage of 3.65 V, and left standing for 10 minutes. Then, the battery was discharged to 2.5 V at a constant current of 0.1C, and the capacity at this time was recorded as the actual discharge capacity D0. Then, the battery was left standing for 5 minutes, charged to 3.65 V at a constant current of 0.1C, and charged to a current of 0.05C (the current was calculated based on the capacity of D0) at a constant voltage of 3.65 V. The battery was left standing for 10 minutes, and discharged at a constant current of 0.1C for 7 hours (the current was calculated based on the capacity of D0). The voltage V1 at this time was recorded. Then, the battery was discharged at a constant current of 1C for 1s (sampling at 100 ms, and the current was calculated based on the indicated capacity of the battery cell). The voltage V2 at this time was recorded. Then, the direct current resistance (DCR) corresponding to 30% state of charge (SOC) of the battery cell was calculated using the following formula:

$$30\% \text{ SOC DCR} = (V2 - V1)/1C.$$

5. Round trip efficiency RTE (25°C) test of lithium-ion battery:

The lithium-ion battery was placed in a 25°C thermostat and left standing for 30 minutes, so that the lithium-ion battery reached a constant temperature. The battery was discharged to 2.5 V at a constant current of 0.5C, and left standing for 15 minutes. The battery was charged to 3.65 V at a constant current of 0.5C, charged to a current of 0.05C at a constant voltage of 3.65 V, left standing for 60 minutes, and then discharged to 2.5 V at a constant current of 0.5C. The battery was charged and discharged continuously for three times at the foregoing current. The charge energy and discharge energy were recorded respectively, and the charge energy $E_c$ and discharge energy $E_d$ of the last one cycle were used to calculate the round trip efficiency, where

$$\text{round trip efficiency} = \text{discharge energy } E_d/\text{charge energy } E_c * 100\%.$$

6. Overcharge test of lithium-ion battery:

At 25°C, the battery was discharged to 2.5 V at 0.5C, charged to 6.5 V at a constant current of 1C, and then charged at a constant voltage of 6.5 V for 3 hours. The surface temperature change of the battery was observed (the criteria for passing the overcharge test is that no fire, burning, or explosion occurs to the battery). 10 batteries were tested in each example or comparative example and the number of batteries that passed the test was recorded.

7. Measurement of active specific surface area of positive electrode of lithium-ion battery:

The positive electrode of the lithium-ion battery was removed and used for assembling a button battery (LFP//Li), and 10 mV of step potential was applied for 30s to the button battery coated with a positive electrode active material. According to the current-time curve integration, the active electrode charge Q was obtained, and capacitance C was obtained through Q/10mV.

The active specific surface area was calculated using a capacitance measuring method (see Electrochemical Research Methods by Tian Zhaowu for details):

$$S_1 = C/(20 \text{ }\mu f) \text{ cm}^2,$$

and

$$S = (S_1 \times 10^{-4})/M \text{ m}^2/g.$$

S is the active specific surface area of the positive electrode, measured in $m^2/g$ and denoted as $X \text{ m}^2/g$; Si is the active surface area of the positive electrode, measured in $cm^2$; C is the capacitance of the sample under test, measured in $\mu f$ (micro Faraday); M is the coating mass of the electrode (single side) excluding the current collector, measured in g; and 20 $\mu f$ is the capacitance of double electric layers per square centimeter of the smooth electrode.

Below, X represents the value of the active specific surface area of the positive electrode.

A. Table 1 shows the types and percentages of additives and relevant performance parameters of lithium-ion batteries in relevant examples and comparative examples.

**Table 1**

| No. | Active specific surface area of positive electrode (X $m^2$/g) | LiPO$_2$F$_2$ (Y%) | X/Y | Cycles at 25°C | Cycles at 45°C | Residual capacity retention rate after 90 days of storage at 100% SOC at 60°C (%) | -10°C 30% SOC DCR (mΩ) |
|---|---|---|---|---|---|---|---|
| Comparative example 1-1 | 0.015 | - | - | 412 | 279 | 39 | 130 |
| Comparative example 1-2 | 0.1 | 0.01 | 10 | 401 | 246 | 30 | 125 |
| Example 1-1 | 0.015 | 0.01 | 1.5 | 545 | 341 | 47 | 122 |
| Example 1-2 | 0.015 | 0.1 | 0.15 | 899 | 578 | 61 | 119 |
| Example 1-3 | 0.015 | 0.3 | 0.05 | 1178 | 764 | 65 | 117 |
| Example 1-4 | 0.015 | 0.5 | 0.03 | 1501 | 1003 | 72 | 114 |
| Example 1-5 | 0.015 | 1 | 0.015 | 1642 | 1053 | 73 | 115 |
| Example 1-6 | 0.015 | 1.5 | 0.01 | 1657 | 1085 | 73 | 116 |
| Example 1-7 | 0.015 | 2 | 0.007 5 | 1661 | 1097 | 73 | 117 |
| Example 1-8 | 0.01 | 0.5 | 0.02 | 1599 | 1042 | 73 | 115 |
| Example 1-9 | 0.05 | 0.05 | 1 | 801 | 468 | 58 | 119 |
| Example 1-10 | 0.08 | 0.1 | 0.8 | 830 | 524 | 60 | 119 |
| Example 1-11 | 0.1 | 0.5 | 0.2 | 1318 | 859 | 70 | 115 |
| Example 1-12 | 0.1 | 0.05 | 2 | 596 | 373 | 51 | 121 |
| "-" means that such material does not exist. | | | | | | | |

From the comparison between Examples 1-1 to 1-12 and Comparative Example 1-1, it can be learned that adding the additive LiPO$_2$F$_2$ to the electrolyte can significantly improve the cycling performance and storage performance of the lithium-ion batteries and can reduce the impedance of the lithium-ion batteries.

From the comparison between Examples 1-1 to 1-12 and Comparative Example 1-2, it can be learned that the cycling performance and storage performance of the lithium-ion batteries obviously deteriorate when the value of X/Y is excessively large (for example, 10). Controlling X/Y within a proper range can guarantee excellent storage performance, cycling performance, and kinetic performance. In this application, X/Y can be in a range of 0.005 to 2.

B. Table 2 shows the types and percentages of additives and relevant performance parameters of lithium-ion batteries in relevant examples and comparative examples. The electrolyte in Example 2-1 to Example 2-12 is prepared by adding vinylene carbonate (VC) to the electrolyte in Example 1-4. The active specific surface area of the positive electrode in Example 2-1 to Example 2-12 is the same as that of the positive electrode in Example 1-4.

**Table 2**

| No. | Percentage of VC (Z%) | Percentage of LiPO$_2$F$_2$ (Y%) | Z/Y | Cycles at 25°C (degraded to 65% of initial capacity) | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | -10°C 30% SOC DCR (mΩ) |
|---|---|---|---|---|---|---|---|---|
| Example 1-4 | - | 0.5% | - | 1501 | 1003 | 72 | 73 | 114 |
| Example 2-1 | 0.1% | 0.5% | 0.20 | 1989 | 1445 | 73 | 74 | 114 |
| Example 2-2 | 0.5% | 0.5% | 1.00 | 5110 | 3583 | 85 | 86 | 116 |
| Example 2-3 | 1% | 0.5% | 2.00 | 8271 | 5789 | 91 | 91.7 | 118 |
| Example 2-4 | 1.5% | 0.5% | 3.00 | 10779 | 7211 | 92 | 92.8 | 119 |
| Example 2-5 | 2% | 0.5% | 4.00 | 11113 | 7801 | 93 | 94 | 120 |
| Example 2-6 | 3% | 0.5% | 6.00 | 10996 | 8021 | 93 | 94 | 121 |
| Example 2-7 | 4% | 0.5% | 8.00 | 7045 | 4899 | 92 | 92 | 135 |
| Example 2-8 | 6% | 0.5% | 12.00 | 4280 | 3801 | 88 | 89 | 140 |
| Example 2-9 | 0.05% | 1% | 0.05 | 1693 | 1069 | 74 | 76 | 114 |
| Example 2-10 | 0.5% | 1% | 0.50 | 6850 | 4629 | 85 | 87 | 115 |
| Example 2-11 | 4% | 0.1% | 40.00 | 6135 | 4348 | 90 | 91 | 127 |
| Example 2-12 | 3% | 0.01% | 300 | 7985 | 5669 | 89 | 90 | 128 |
| Example 2-13 | 6% | 0.01% | 600 | 3924 | 2839 | 72 | 74 | 176 |

"-" means that such material does not exist.

From the foregoing performance test results, it can be learned that adding vinylene carbonate (VC) to the electrolyte satisfying $0.005 \leq X/Y \leq 2$ can significantly improve the cycling performance and storage performance of the lithium-ion batteries, without changing the impedance greatly. The cycling performance and storage performance of the lithium-ion batteries are improved dramatically especially when Z/Y is in a range of 0.5 to 300.

Vinylene carbonate can form a solid electrolyte interface (SEI) film with excellent thermal and chemical stability on the graphite surface. This can effectively inhibit the side reactions of solvents on the graphite surface and deposition of transition metals. However, vinylene carbonate has high film-forming impedance, and therefore an excessively high percentage of vinylene carbonate can easily lead to lithium precipitation during battery charging and deterioration of discharge performance. Adding the LiPO$_2$F$_2$ to the electrolyte containing the vinylene carbonate can inhibit the decomposition of the vinylene carbonate and help form a film. Controlling the ratio of the vinylene carbonate to the LiPO$_2$F$_2$ can

form a SEI film with good stability and low impedance, thereby guaranteeing excellent storage performance, cycling performance, and kinetic performance. Therefore, in this application, Z/Y is preferably in a range of 0.5 to 300.

C. Table 3 shows the types and percentages of additives and relevant performance parameters of lithium-ion batteries in relevant examples and comparative examples. The electrolyte in Example 3-1 to Example 3-8 is prepared by adding fluoroethylene carbonate (FEC) to the electrolyte in Example 2-3. The active specific surface area of the positive electrode and the concentration of the $LiPO_2F_2$ in the electrolyte in Example 3-1 to Example 3-8 are the same as those in Example 2-3.

**Table 3**

| No. | Percentage of VC (%) | Percentage of FEC (%) | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | -10°C 30% SOC DCR (mΩ) | Round trip efficiency (%) |
|---|---|---|---|---|---|---|---|
| Example 1-4 | - | - | 1003 | 72 | 73 | 114 | 70.3 |
| Example 2-3 | 1 | - | 5789 | 91 | 91.7 | 118 | 95 |
| Example 3-1 | 1 | 0.01 | 5799 | 91.1 | 91.8 | 118 | 95.1 |
| Example 3-2 | 1 | 0.1 | 5815 | 91.1 | 91.8 | 118 | 95.2 |
| Example 3-3 | 1 | 0.2 | 5880 | 91.2 | 91.9 | 118 | 95.2 |
| Example 3-4 | 1 | 0.5 | 6500 | 91.5 | 92 | 117 | 95.4 |
| Example 3-5 | 1 | 1 | 7189 | 91.9 | 92.2 | 116 | 95.8 |
| Example 3-6 | 1 | 2 | 8200 | 92.1 | 92.3 | 117 | 95.9 |
| Example 3-7 | 1 | 3 | 8220 | 92.1 | 92.3 | 119 | 95.8 |
| Example 3-8 | 1 | 5 | 8221 | 92.1 | 92.3 | 121 | 95.7 |
| "-" means that such material does not exist. | | | | | | | |

From the foregoing performance test results, it can be learned that adding the fluoroethylene carbonate (FEC) to the electrolyte satisfying $0.005 \leq X/Y \leq 2$ and containing the vinylene carbonate (VC) can significantly improve the cycling performance, storage performance, and round trip efficiency of the lithium-ion batteries, without changing the impedance greatly.

Fluoroethylene carbonate can form a SEI film with excellent thermal and chemical stability and low impedance on the graphite surface. This can effectively inhibit the side reactions of solvents on the graphite surface and deposition of transition metals, thereby effectively reducing the loss of active lithium at the graphite negative electrode and significantly increasing the capacity retention rate during cycling and storage. However, an excessively high percentage of fluoroethylene carbonate will increase the viscosity of electrolyte, thereby degrading the kinetic performance. In addition, when the percentage of fluoroethylene carbonate is excessively high, a large amount of HF is produced as a result of decomposition at high temperatures. This leads to gas production risks during storage. Therefore, in this application, the percentage of the fluoroethylene carbonate is preferably 0.01% to 5%.

D. Table 4 shows the types and percentages of additives and relevant performance parameters of lithium-ion batteries in relevant examples and comparative examples. The electrolyte in Example 4-1 to Example 4-19 is prepared by adding the additive shown in Table 4 to the electrolyte in Example 1-4. The active specific surface area of the positive electrode and the concentration of the $LiPO_2F_2$ in the electrolyte in Example 4-1 to Example 4-19 are the same as those in Example 1-4.

**Table 4**

| No. | LiBOB (%) | $B_4Li_2O_7$ (%) | LiDFOB (%) | $LiPF_6$ (%) | LiFSI (%) | LiTFSI (%) |
|---|---|---|---|---|---|---|
| Example 1-4 | - | - | - | 12.5 | - | - |
| Example 4-1 | 0.01 | - | - | 12.5 | - | - |
| Example 4-2 | 0.1 | - | - | 12.5 | - | - |
| Example 4-3 | 0.2 | - | - | 12.5 | - | - |
| Example 4-4 | 0.5 | - | - | 12.5 | - | - |
| Example 4-5 | 1 | - | - | 12.5 | - | - |
| Example 4-6 | 2 | - | - | 12.5 | - | - |
| Example 4-7 | - | 0.5 | - | 12.5 | - | - |
| Example 4-8 | - | - | 0.5 | 12.5 | - | - |
| Example 4-9 | 0.5 | 0.5 | - | 12.5 | - | - |
| Example 4-10 | 0.5 | 0.5 | 0.5 | 12.5 | - | - |
| Example 4-11 | - | - | - | 12.5 | 0.5 | - |
| Example 4-12 | - | - | - | 10. | 3 | - |
| Example 4-13 | - | - | - | 6.25 | 7.5 | - |
| Example 4-14 | - | - | - | - | 16 | - |
| Example 4-15 | - | - | - | 12.5 | - | 0.5 |
| Example 4-16 | - | - | - | 10. | - | 3 |
| Example 4-17 | - | - | - | 6.25 | - | 7.5 |
| Example 4-18 | - | - | - | - | - | 16 |
| Example 4-19 | - | - | - | 10. | - | - |
| "-" means that such material does not exist. | | | | | | |

Table 5 shows the relevant performance parameters of lithium-ion batteries in the foregoing examples and comparative examples.

**Table 5**

| No. | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | Thickness swelling rate after 90 days of storage at 0% SOC at 60°C (%) | -10°C 30% SOC DCR (mΩ) | Batteries that passed the overcharge performance test |
|---|---|---|---|---|---|---|
| Example 1-4 | 1003 | 72 | 73 | 30 | 114 | 4 |
| Example 4-1 | 1036 | 72 | 73 | 30 | 114 | 4 |
| Example 4-2 | 1146 | 75 | 76 | 28 | 113 | 4 |

(continued)

| No. | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | Thickness swelling rate after 90 days of storage at 0% SOC at 60°C (%) | -10°C 30% SOC DCR (mΩ) | Batteries that passed the overcharge performance test |
|---|---|---|---|---|---|---|
| Example 4-3 | 1337 | 78 | 80 | 22 | 112 | 5 |
| Example 4-4 | 1837 | 83 | 85 | 15 | 109 | 6 |
| Example 4-5 | 3548 | 89 | 91 | 10 | 109 | 6 |
| Example 4-6 | 3601 | 89 | 91 | 9 | 112 | 6 |
| Example 4-7 | 1701 | 82 | 83 | 12 | 107 | 6 |
| Example 4-8 | 1837 | 83 | 85 | 15 | 109 | 6 |
| Example 4-9 | 3319 | 89 | 91 | 10 | 108 | 6 |
| Example 4-10 | 3863 | 90 | 92 | 8 | 107 | 6 |
| Example 4-11 | 1793 | 82 | 83 | 17 | 109 | 7 |
| Example 4-12 | 1992 | 86 | 88 | 12 | 103 | 9 |
| Example 4-13 | 2289 | 89 | 91 | 10 | 92 | 10 |
| Example 4-14 | 2405 | 92 | 93 | 8 | 86 | 10 |
| Example 4-15 | 1821 | 82 | 83 | 17 | 109 | 7 |
| Example 4-16 | 2018 | 87 | 88 | 12 | 101 | 9 |
| Example 4-17 | 2306 | 90 | 91 | 9 | 91 | 10 |
| Example 4-18 | 2517 | 92 | 93 | 7 | 85 | 10 |
| Example 4-19 | 878 | 69 | 70 | 57 | 121 | 8 |

Lithium difluoro(oxalato)borate (LiDFOB), lithium bis(oxalato)borate (LiBOB), lithium bis(fluorosulfonyl)imide (LiFSI), lithium bis(trifluoromethanesulfonyl)imide (LiTFSI), lithium tetrafluoroborate ($LiBF_4$), $B_4Li_2O_7$, $Li_3BO_3$, $CF_3LiO_3S$, and lithium hexafluorophosphate ($LiPF_6$) can all form a protective film with good thermal and chemical stability on the surfaces of positive and negative electrodes. This inhabits the side reactions of electrodes and electrolyte, achieving excellent cycling stability, storage stability, kinetic performance, and safety performance. In addition, LiFSI and LiTFSI have high thermal stability and a low degree of association between anions and cations, and therefore feature a high degree of solubility and dissociation in carbonate systems. Using LiFSI and LiTFSI as the electrolytic salt in place of part or

EP 4 459 731 A1

all of LiPF$_6$ can achieve better cycling performance, storage performance, kinetic performance, and safety performance.

E. Table 6 shows the compositions and performance test results of lithium-ion batteries in relevant examples. The compositions of electrolytes in Example 5-1 and Example 5-2 are the same as those in Example 1-4. The types of positive electrode active materials in Example 5-1 and Example 5-2 are shown in Table 6. LFP stands for lithium iron phosphate, and LMFP stands for lithium manganese iron phosphate.

### Table 6

| No. | Type of positive electrode active material | Cycles at 25°C (degraded to 65% of initial capacity) | Cycles at 45°C (degraded to 65% of initial capacity) | Residual capacity retention rate after 90 days of storage at 100% SOC at 60°C (%) | -10°C 30% SOC DCR (mQ) |
|---|---|---|---|---|---|
| Example 1-4 | LFP | 1501 | 1003 | 72 | 114 |
| Example 5-1 | LMFP | 1475 | 1001 | 78 | 135 |
| Example 5-2 | LFP:LMFP (mass ratio) = 5:5 | 1628 | 1098 | 80 | 126 |

From the foregoing performance test results, it can be learned that no obvious difference is observed on the cycling performance and storage performance of the lithium-ion batteries between using LMFP or a mixture of LMFP and LFP as the positive electrode active material and using LFP as the positive electrode active material. Therefore, the electrolytes in the foregoing examples are also suitable for positive electrodes using LMFP or the mixture of LFP and LMFP as the active material.

F. Table 7 shows the compositions and performance test results of lithium-ion batteries in relevant examples. The electrolyte in Example 6-1 to Example 6-11 is prepared by adding VC to the electrolyte in Example 1-3. The active specific surface area of the positive electrode and the concentration of the LiPO$_2$F$_2$ in the electrolyte in Example 6-1 to Example 6-11 are the same as those in Example 1-3. The weight of the vinylene carbonate in the electrolyte is W1 g, the weight of the negative electrode is W2 g, and W1/W2 represents the percentage of the VC per unit mass of negative electrode.

### Table 7

| No. | W1/W2 | Cycles at 25°C (degraded to 65% of initial capacity) | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | -10°C 30% SOC DCR (mΩ) |
|---|---|---|---|---|---|---|
| Example 1-3 | - | 812 | 529 | 59 | 60.2 | 120 |
| Example 6-1 | 0.0001 | 1201 | 605 | 63.9 | 65.2 | 120 |
| Example 6-2 | 0.0003 | 2120 | 1200 | 78.5 | 80.5 | 119 |
| Example 6-3 | 0.0004 | 3011 | 1521 | 83.9 | 85.8 | 118 |
| Example 6-4 | 0.001 | 4178 | 2500 | 85.8 | 88 | 117 |
| Example 6-5 | 0.005 | 6579 | 4000 | 87.7 | 90.5 | 116 |
| Example 6-6 | 0.01 | 7000 | 4800 | 90.1 | 91.6 | 117 |

(continued)

| No. | W1/W2 | Cycles at 25°C (degraded to 65% of initial capacity) | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | -10°C 30% SOC DCR (mΩ) |
|---|---|---|---|---|---|---|
| Example 6-7 | 0.02 | 8008 | 5789 | 90.2 | 91.7 | 118 |
| Example 6-8 | 0.03 | 8300 | 6001 | 90.4 | 91.7 | 119 |
| Example 6-9 | 0.031 | 8311 | 6020 | 90.5 | 91.7 | 121 |
| Example 6-10 | 0.035 | 8309 | 6108 | 90.5 | 91.6 | 138 |
| Example 6-11 | 0.04 | 8299 | 6108 | 90.5 | 91.6 | 150 |
| "-" means that such material does not exist. | | | | | | |

From the foregoing performance test results, it can be learned that adding the VC to the electrolyte satisfying $0.005 \leq X/Y \leq 2$ can significantly improve the cycling performance and storage performance of the lithium-ion batteries, without changing the impedance greatly. The cycling performance and storage performance of the lithium-ion batteries are significantly improved but the impedance is reduced especially when W1/W2 is 0.001 to 0.031.

Vinylene carbonate can form a SEI film with excellent thermal and chemical stability on the graphite surface. This can effectively inhibit the side reactions of solvents on the graphite surface and deposition of transition metals. Sufficient VC can ensure that a dense protective film is formed on the graphite surface. However, the film-forming impedance is high, and therefore an excessively high percentage of vinylene carbonate can easily lead to lithium precipitation during battery charging and deterioration of discharge performance. Therefore, in this application, the percentage of the VC per unit mass of negative electrode is preferably 0.001 to 0.031.

G. Table 8 shows the compositions and performance test results of lithium-ion batteries in relevant examples. The electrolyte in Example 7-1 to Example 7-12 is prepared by adding a compound containing an S=O functional group to the electrolyte in Example 6-7. The active specific surface area of the positive electrode and the concentration of the $LiPO_2F_2$ in the electrolyte in Example 7-1 to Example 7-12 are the same as those in Example 6-7. The weight of the vinylene carbonate in the electrolyte is W1 g, the weight of the negative electrode is W2 g, and W1/W2 represents the percentage of the VC per unit mass of negative electrode.

Abbreviations in Table 8 are explained as follows:

DTD: ethylene sulfate
MMDS: methylene methyl disulfonate
PS: 1,3-propane sultone

**Table 8**

| No. | W1/W2 | DTD (%) | MMDS (%) | PS (%) |
|---|---|---|---|---|
| Example 1-3 | - | - | - | - |
| Example 6-7 | 0.02 | - | - | - |
| Example 7-1 | 0.02 | 0.01 | - | - |
| Example 7-2 | 0.02 | 0.1 | - | - |
| Example 7-3 | 0.02 | 0.2 | - | - |
| Example 7-4 | 0.02 | 0.5 | - | - |

(continued)

| No. | W1/W2 | DTD (%) | MMDS (%) | PS (%) |
|---|---|---|---|---|
| Example 7-5 | 0.02 | 1 | - | - |
| Example 7-6 | 0.02 | 3 | - | - |
| Example 7-7 | 0.02 | 5 | - | - |
| Example 7-8 | 0.02 | - | 0.5 | - |
| Example 7-9 | 0.02 | - | - | 0.5 |
| Example 7-10 | 0.02 | 0.5 | 0.5 | - |
| Example 7-11 | 0.02 | - | 0.5 | 0.5 |
| Example 7-12 | 0.02 | 0.5 | 0.5 | 0.5 |
| "-" means that such material does not exist. | | | | |

Table 9 shows the performance test results of the foregoing examples.

Table 9

| No. | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | Thickness swelling rate after 90 days of storage at 0% SOC at 60°C (%) | -10°C 30% SOC DCR (mΩ) | Batteries that passed the overcharge test |
|---|---|---|---|---|---|---|
| Example 1-3 | 529 | 60.1 | 60.2 | 115 | 120 | 0 |
| Example 6-7 | 5789 | 91 | 91.7 | 30 | 118 | 8 |
| Example 7-1 | 5790 | 91 | 91.7 | 29 | 118 | 8 |
| Example 7-2 | 5868 | 91.1 | 91.8 | 27 | 117 | 8 |
| Example 7-3 | 6016 | 91.3 | 92.2 | 15 | 116 | 10 |
| Example 7-4 | 7101 | 92.3 | 92.8 | 5 | 115 | 10 |
| Example 7-5 | 7134 | 92.3 | 92.8 | 5 | 116 | 10 |
| Example 7-6 | 7110 | 92.3 | 92.7 | 8 | 118 | 10 |
| Example 7-7 | 7089 | 92.3 | 92.7 | 9 | 124 | 10 |
| Example 7-8 | 7230 | 92.3 | 92.8 | 4 | 117 | 10 |
| Example 7-9 | 7021 | 92.1 | 92.6 | 4 | 117 | 10 |
| Example 7-10 | 8125 | 92.4 | 92.8 | 3 | 117 | 10 |

(continued)

| No. | Cycles at 45°C (degraded to 65% of initial capacity) | Residual capacity retention rate after 90 days of storage at 100% SOC at 60°C (%) | Recoverable capacity retention rate after 90 days of storage at 100% SOC at 60°C (%) | Thickness swelling rate after 90 days of storage at 0% SOC at 60°C (%) | -10°C 30% SOC DCR (mΩ) | Batteries that passed the overcharge test |
|---|---|---|---|---|---|---|
| Example 7-11 | 8065 | 92.3 | 92.7 | 3 | 117 | 10 |
| Example 7-12 | 8171 | 92.3 | 92.8 | 2 | 117 | 10 |

From the foregoing performance test results, it can be learned that adding the compound containing an S=O functional group to the electrolyte satisfying that $0.005 \leq X/Y \leq 2$ and/or W1/W2 is 0.001 to 0.031 can significantly improve the cycling performance, storage performance, and overcharge test performance of the lithium-ion batteries while reducing the impedance.

The compound containing an S=O functional group can form a protective film with good thermal and chemical stability on the surfaces of positive and negative electrodes. This inhabits the side reactions of electrodes and electrolyte, achieving excellent cycling stability, storage stability (suppressed gas production and higher capacity retention rate), kinetic performance, and safety performance. When the percentage of the compound containing an S=O functional group is excessively low, the film-forming protection is not adequate and performance cannot be improved significantly. When the percentage of the compound containing an S=O functional group is excessively high, the film-forming impedance is high at positive and negative electrodes, causing no improvement in performance but degrading the kinetics. Therefore, in this application, the percentage of the compound containing an S=O functional group is preferably 0.01% to 5%.

References to "some embodiments", "some of the embodiments", "an embodiment", "another example", "examples", "specific examples", or "some examples" in the specification mean the inclusion of specific features, structures, materials, or characteristics described in at least one embodiment or example of this application in the embodiment or example. Therefore, descriptions in various places throughout this specification, such as "in some embodiments", "in the embodiments", "in an embodiment", "in another example", "in an example", "in a specific example", or "examples", do not necessarily refer to the same embodiment or example of this application. In addition, a specific feature, structure, material, or characteristic herein may be combined in any appropriate manner in one or more embodiments or examples.

Although illustrative embodiments have been demonstrated and described, persons skilled in the art should understand that the foregoing embodiments are not to be construed as limiting this application, and that some embodiments may be changed, replaced, and modified without departing from the spirit, principle, and scope of this application.

**Claims**

1.  An electrochemical device, comprising:

    a negative electrode;
    a positive electrode, wherein the positive electrode comprises a current collector and a positive electrode active material layer provided on the current collector, the positive electrode active material layer comprises a positive electrode active material, and the positive electrode has an active specific surface area of X $m^2/g$; and
    an electrolyte, wherein the electrolyte contains an additive A, the additive A contains $LiPO_2F_2$, and a weight percentage of the $LiPO_2F_2$ is Y% based on a weight of the electrolyte; wherein

$$0.005 \leq X/Y \leq 2$$

    is satisfied.

2.  The electrochemical device according to claim 1, wherein at least one of the following conditions (i) to (iii) is satisfied:

    (i)

$$0.01 \leq X \leq 0.1;$$

(ii)

$$0.01 \leq Y \leq 2;$$

(iii)

$$0.005 \leq X/Y \leq 1.$$

or

3. The electrochemical device according to claim 1, wherein the electrolyte further contains vinylene carbonate, and a weight percentage of the vinylene carbonate is Z% based on the weight of the electrolyte, wherein Z is 0.01 to 6.

4. The electrochemical device according to claim 3, wherein Z/Y is 0.01 to 600.

5. The electrochemical device according to claim 1, wherein the electrolyte further contains fluoroethylene carbonate, and a weight percentage of the fluoroethylene carbonate is 0.01% to 5% based on the weight of the electrolyte.

6. The electrochemical device according to claim 1, wherein the electrolyte further contains an additive B and the additive B is at least one selected from the following compounds: lithium difluoro(oxalato)borate, lithium bis(oxalato)borate, lithium bis(fluorosulfonyl)imide, lithium bis(trifluoromethanesulfonyl)imide, lithium tetrafluoroborate, $B_4Li_2O_7$, $Li_3BO_3$, $CF_3LiO_3S$, lithium hexafluorophosphate, and lithium perchlorate; and/or a weight percentage of the additive B is 0.01% to 16% based on the weight of the electrolyte.

7. The electrochemical device according to claim 1, wherein the positive electrode active material comprises element M and the element M is at least one selected from Fe, Mn, Al, Ca, K, Na, Mg, Ti, and Zn.

8. The electrochemical device according to claim 3, wherein a weight of the vinylene carbonate is W1 g, a weight of the negative electrode is W2 g, and W1/W2 is 0.001 to 0.031.

9. The electrochemical device according to claim 1, wherein the electrolyte further contains a compound containing an S=O functional group and the compound containing an S=O functional group is at least one selected from the following compounds: 1,3-propane sultone, ethylene sulfate, methylene methyl disulfonate, propene sultone, 4-methylvinyl sulfate, 1,4-butane sultone, and 1,2,6-oxy-dithiane-2,2,6,6-tetroxide; and/or a weight percentage of the compound containing an S=O functional group is 0.01% to 5% based on the weight of the electrolyte.

10. An electronic device, wherein the electronic device comprises the electrochemical device according to any one of claims 1 to 9.

| INTERNATIONAL SEARCH REPORT | | International application No. |
|---|---|---|
| | | **PCT/CN2021/143871** |

**A. CLASSIFICATION OF SUBJECT MATTER**

H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 正极, 磷酸铁锂, 负极, 电解液, 添加剂, 二氟磷酸锂, 活性, 比表面积, 含量, 比例, 百分比, battery, cathode, positive, LiFePO4, negative, anode, electrolyte, additive, LiPO2F2, active, specific w surface w area, content, proportion, ration, percent+

**C. DOCUMENTS CONSIDERED TO BE RELEVANT**

| Category* | Citation of document, with indication, where appropriate, of the relevant passages | Relevant to claim No. |
|---|---|---|
| A | CN 111640977 A (ZHUHAI COSMX BATTERY CO., LTD.) 08 September 2020 (2020-09-08)<br>    description, paragraphs 4-46 | 1-10 |
| A | US 2019312306 A1 (NEC CORP.) 10 October 2019 (2019-10-10)<br>    entire document | 1-10 |
| A | JP 2014072025 A (PANASONIC CORP.) 21 April 2014 (2014-04-21)<br>    entire document | 1-10 |
| A | CN 107017429 A (SAMSUNG SDI CO., LTD.) 04 August 2017 (2017-08-04)<br>    entire document | 1-10 |
| A | CN 208460908 U (CHINA AVIATION LITHIUM BATTERY RESEARCH INSTITUTE CO., LTD. et al.) 01 February 2019 (2019-02-01)<br>    entire document | 1-10 |
| A | CN 112331833 A (JIANGXI HUIYI NEW ENERGY CO., LTD.) 05 February 2021 (2021-02-05)<br>    entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2022** | **27 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/143871**

| Patent document cited in search report | | | Publication date (day/month/year) | Patent family member(s) | | | Publication date (day/month/year) |
|---|---|---|---|---|---|---|---|
| CN | 111640977 | A | 08 September 2020 | None | | | |
| US | 2019312306 | A1 | 10 October 2019 | JP | WO2017217407 | A1 | 11 April 2019 |
| | | | | WO | 2017217407 | A1 | 21 December 2017 |
| | | | | US | 10897062 | B2 | 19 January 2021 |
| JP | 2014072025 | A | 21 April 2014 | None | | | |
| CN | 107017429 | A | 04 August 2017 | US | 2017179528 | A1 | 22 June 2017 |
| | | | | KR | 20170072032 | A | 26 June 2017 |
| | | | | EP | 3182497 | A1 | 21 June 2017 |
| | | | | EP | 3182497 | B1 | 03 October 2018 |
| | | | | US | 10734681 | B2 | 04 August 2020 |
| | | | | CN | 107017429 | B | 25 February 2022 |
| CN | 208460908 | U | 01 February 2019 | None | | | |
| CN | 112331833 | A | 05 February 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9812739 B